# FASCICULE DE BREVET EUROPEEN

(11) **EP 3 020 081 B1**
(45) Date de publication et mention de la délivrance du brevet: **30.08.2017**
(21) Numéro de dépôt: 14749912.3
(22) Date de dépôt: 04.07.2014
(51) Int. Cl.: H01M 2/20, H01M 2/06, H01M 2/26, B60L 11/18, H01M 2/30, H01M 10/04, H01M 10/0585

(54) **MODULE A PLUSIEURS CELLULES DÉMONTABLES, BATTERIE COMPORTANT UN TEL MODULE ET VÉHICULE COMPORTANT UNE TELLE BATTERIE**
MODUL MIT MEHREREN ENTFERNBAREN ZELLEN, BATTERIE MIT SOLCH EINEM MODUL UND FAHRZEUG MIT SOLCH EINER BATTERIE
MODULE HAVING A PLURALITY OF REMOVABLE CELLS, BATTERY COMPRISING SUCH A MODULE AND VEHICLE COMPRISING SUCH A BATTERY

(30) Priorité: 11.07.2013 FR 1356823
(43) Date de publication de la demande: 18.05.2016
(73) Titulaire: Renault S.A.S., 92100 Boulogne-Billancourt (FR)
(72) Inventeur: LEROUX, Thierry, F-76000 Rouen (FR)
(86) Numéro de dépôt international: PCT/FR2014/051730
(87) Numéro de publication internationale: WO 2015/004374

(56) Documents cités:
- EP-A2- 1 530 247
- US-A1- 2011 052 951
- US-A1- 2011 229 754
- US-A1- 2012 107 659
- US-A1- 2012 156 527

## Description

La présente invention concerne un module à plusieurs cellules démontable, une batterie comportant un tel module, ainsi qu'un véhicule comportant une telle batterie. Elle s'applique notamment aux véhicules électriques ou hybrides.

Dans le contexte actuel de consensus autour du réchauffement climatique, la diminution des émissions de dioxyde de carbone (CO₂) est un défi majeur auquel sont confrontés les constructeurs automobiles, les normes étant toujours plus exigeantes en la matière.

Outre l'amélioration constante des rendements des moteurs thermiques classiques, qui s'accompagne d'une baisse des émissions de CO₂, les véhicules électriques (« EV » d'après la terminologie anglo-saxonne « Electric Vehicle ») et les véhicules hybrides thermique-électrique (« HEV » d'après la terminologie anglo-saxonne « Hybrid Electric Vehicle ») sont aujourd'hui considérés comme la solution la plus prometteuse pour diminuer les émissions de CO₂.

Différentes technologies de stockage de l'énergie électrique ont été testées dans les dernières années afin de maximiser l'autonomie des EV, qui nécessitent d'être branchés régulièrement via un chargeur afin de recharger leur batterie de traction. Il apparaît aujourd'hui que les batteries à cellules lithium-ion (Li-ion) sont celles qui permettent d'obtenir le meilleur compromis entre la densité de puissance, qui favorise les performances en termes d'accélération notamment, et la densité d'énergie, qui favorise l'autonomie. Cependant, l'utilisation de cette technologie Li-ion pour constituer des batteries de traction pour EV n'est pas sans poser de nombreuses difficultés, notamment si l'on considère les niveaux de tension, de l'ordre de 400 volts (V), et les niveaux de courant requis pour entraîner un EV. Pour atteindre ces niveaux de tension et de courant, il est nécessaire d'interconnecter en série et en parallèle des cellules Li-ion pour former des modules, puis d'interconnecter des modules pour former une batterie dépassant couramment 200 kilogrammes.

Un module classique est formé par empilement de cellules prismatiques souples de type « pouch » ou « soft bag » selon l'expression anglo-saxonne. Il s'agit de cellules se présentant sous la forme d'une enveloppe en plastique souple, sensiblement parallélépipédique ou en plaque épaisse, contenant un électrolyte en gel. Chaque cellule comporte, disposés sur un ou deux de ses bords, deux connecteurs de type « tab » selon l'expression anglo-saxonne, et formant les pôles positif et négatif de la cellule. Obtenus par découpage de bandes de quelques centimètres de largeur dans des feuilles métalliques, ces connecteurs de type « tab » sont souples et plat et peuvent être usinés de différentes manières. Par exemple, une solution connue est de relier électriquement le pôle positif et le pôle négatif de deux cellules adjacentes par un procédé de clinchage. Une autre solution connue est de les relier électriquement par un procédé de soudage. Un inconvénient de tels procédés est leur coût et leur manque de fiabilité, notamment dans un environnement vibratoire comme une automobile. Un autre inconvénient est que le module ainsi obtenu est indémontable pour le recyclage ou la réparation, sauf à détruire les cellules.

Dans le but de surmonter ces inconvénients, la demande FR2959609 divulgue un module constitué de cellules prismatiques souples empilées les unes sur les autres et comportant chacune des connecteurs souples et plats. Ces connecteurs souples et plats sont percés de trous et interconnectés par pincement entre des entretoises elles-mêmes percées de trous. Des tirants passent au travers des trous dans les connecteurs et dans les entretoises et appliquent la force de pincement. L'inconvénient majeur de cette solution tient à la difficulté de montage et de démontage du module, nécessitant de visser/dévisser plusieurs tirants et de manipuler une multitude d'éléments, notamment des vis, des écrous, des rondelles et des entretoises. En particulier, un tel module s'avère complètement inadapté à un montage à la chaîne.

L'invention a notamment pour but de surmonter les inconvénients précités, notamment de fournir un module pouvant être facilement monté à la chaîne. Elle constitue un excellent complément de l'invention faisant l'objet de la demande de brevet français de numéro de dépôt FR1202026 déposée en juillet 2012 par la demanderesse. A cet effet, l'invention a pour objet un module comportant une pluralité de cellules prismatiques souples de stockage d'électricité, de type « pouch » ou « soft bag ». Chaque cellule comporte sur au moins un de ses bords une borne électrique souple et plate, de type « tab ». Les cellules sont agencées l'une contre l'autre pour former un empilement. Les bornes électriques des cellules sont alignées dans l'empilement. Des bornes souples et plates d'un couple de deux cellules adjacentes dans l'empilement, l'une étant une borne positive et l'autre étant une borne négative, sont repliées entre lesdites deux cellules. Deux entretoises sont insérées dans le pli de chacune des deux dites bornes souples respectivement. Le module comporte des moyens pour exercer une force de compression de l'empilement de cellules disposés de manière à comprimer l'une contre l'autre au moins une partie des deux dites bornes entre les deux dites entretoises.

Dans un mode de réalisation préférentiel, chaque cellule prismatique peut comporter une borne positive et une borne négative disposées sur des bords opposés de ladite cellule, les cellules pouvant être disposées dans l'empilement de telle sorte que tout couple de cellules adjacentes ait une borne positive et une borne négative comprimées au moins en partie l'une contre l'autre entre deux entretoises.

Avantageusement, la borne négative d'une première cellule de l'empilement peut être connectée à une borne négative dudit module, la borne positive d'une dernière cellule (16) de l'empilement pouvant être connectée à une borne positive dudit module.

Par exemple, les moyens pour exercer la force de compression peuvent inclure au moins une pince, au moins une entretoise faite d'un matériau électriquement isolant disposée entre deux cellules pour transmettre la force compression à l'ensemble de l'empilement de cellules.

Par exemple, la pince peut être faite au moins partiellement d'un matériau déformable, de sorte qu'une force de rappel, exercée par le matériau pour ramener la pince à une forme initiale, comprime l'empilement.

Avantageusement, les entretoises peuvent être faites au moins partiellement d'un matériau ayant une résistance élevée à la compression.

Dans un mode de réalisation, les moyens de compression peuvent inclure un réceptacle contenant l'empilement de cellules, un couvercle dudit réceptacle pouvant exercer, dans une configuration de fermeture dudit réceptacle, une force de compression sur l'empilement.

Un autre objet de l'invention est une batterie comportant au moins un module comme celui décrit précédemment.

Encore un autre objet de l'invention est un véhicule électrique ou hybride comportant une telle batterie de traction.

La présente invention a encore pour principal avantage qu'elle permet le démontage facile des cellules pour recyclage ou réparation.

D'autres caractéristiques et avantages de l'invention apparaîtront à l'aide de la description qui suit faite en regard de dessins annexés qui représentent :
- la figure 1, par une vue schématique de dessus, un exemple de réalisation d'un module selon l'invention ;
- la figure 2, par une vue schématique de dessous, une cellule d'un module selon l'invention ;
- la figure 3, par une vue schématique de face en coupe, un boîtier d'accueil pour un module selon l'invention.

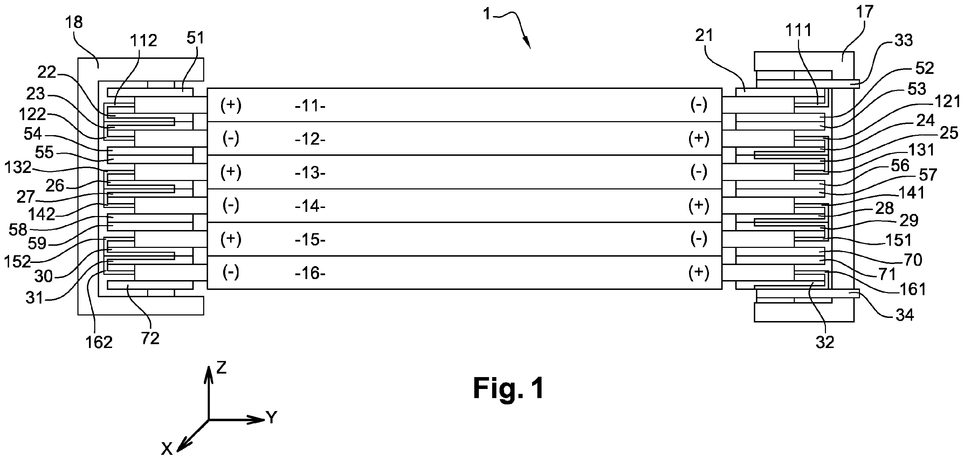

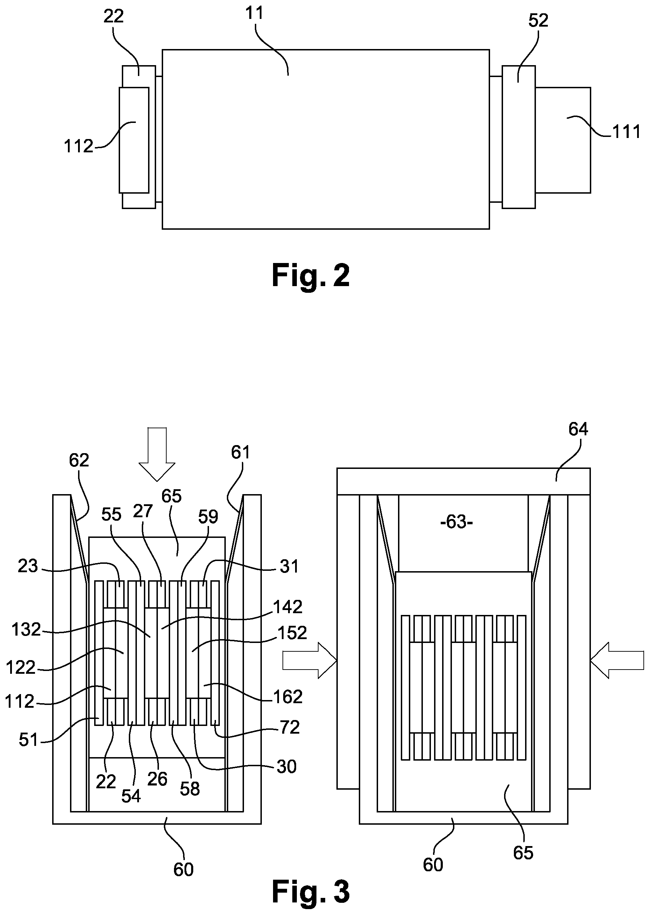

La figure 1 illustre, par une vue schématique de dessus dans un repère (X,Y,Z), un module 1 représentatif d'un exemple de réalisation de l'invention. Le module de cet exemple comporte six cellules prismatiques souples 11, 12, 13, 14, 15 et 16, de type « pouch » ou « soft bag », empilées l'une sur l'autre selon l'axe Z. Il faut comprendre que, quoique relativement souples lorsqu'elles sont manipulées individuellement, les cellules 11, 12, 13, 14, 15 et 16 forment un ensemble relativement rigide une fois empilées. De plus, deux éléments 17 et 18 sont disposés de manière à pincer l'empilement des cellules, exerçant une force de compression sur l'empilement selon l'axe Z, en quatre surfaces d'appui sensiblement rectilignes selon l'axe X. Dans la suite de la présente demande, les éléments 17 et 18 seront donc désignés plus simplement comme des « pinces ». Avantageusement, les pinces 17 et 18 peuvent être faites d'un matériau déformable, un matériau métallique ou plastique par exemple, de sorte que la force de compression est une simple force de rappel exercée par le matériau pour ramener les pinces 17 et 18 à leur forme initiale. Il faut comprendre que, en combinaison avec la rigidité relative de l'empilement des cellules, les pinces 17 et 18 assurent ainsi au moins partiellement la tenue mécanique du module 1. Chacune des cellules 11, 12, 13, 14, 15 et 16 comporte sur l'un de ses bords un pôle positif, ainsi qu'un pôle négatif sur le bord opposé. Le pôle négatif de la cellule 11 est matérialisé par un connecteur 111 souple et plat de type « tab ». Le connecteur 111 est replié du côté opposé à la cellule adjacente 12, une entretoise 21 étant disposée dans le pli du connecteur 111. Cette entretoise 21 a été préalablement collée à l'enveloppe externe de la cellule 11, afin de faciliter le processus d'assemblage, de la même manière que toute les entretoises décrites par la suite ont été pré-collée à leur cellule adjacente. L'entretoise 21 peut aussi bien être faite d'un matériau conducteur de l'électricité, comme un métal, que d'un matériau isolant de l'électricité, comme du plastique, dès lors que le matériau utilisé confère à l'entretoise 21 une résistance élevée à la compression. Entre l'extrémité repliée du connecteur 111 et la pince 17 est insérée une borne 33 formant le pôle négatif du module 1. Les cellules sont agencées de sorte que deux cellules successives dans l'empilement aient leur pôles de polarités opposées en regard l'un de l'autre. Ainsi, le pôle positif de la cellule 11, matérialisé par le connecteur 112 souple et plat, est disposé en regard du pôle négatif de la cellule 12, matérialisé par le connecteur 122 souple et plat. Les connecteurs 112 et 122 sont tous deux repliés entre les cellules 11 et 12. Une entretoise 22 est disposée dans le pli du connecteur 112, pré-collée à l'enveloppe externe de la cellule 11, alors qu'une entretoise 23 est disposée dans le pli du connecteur 122, pré-collée à l'enveloppe externe de la cellule 12, de telle sorte que les extrémités repliées des connecteurs 112 et 122 sont fermement maintenues en contact électrique entre les entretoises 22 et 23, sous la pression exercée par la pince 18. A cet effet, une entretoise 51 faite d'un matériau isolant de l'électricité est insérée entre la cellule 11 et la pince 18, de manière à transmettre la force de compression exercée par la pince 18 au reste de l'empilement. Les entretoises 22 et 23, quant à elles, peuvent aussi bien être faites d'un matériau conducteur de l'électricité, comme un métal, que d'un matériau isolant de l'électricité, comme du plastique, dès lors que le matériau utilisé confère aux entretoises 22 et 23 une résistance élevée à la compression. Le pôle positif de la cellule 12, matérialisé par le connecteur 121 souple et plat, est disposé en regard du pôle négatif de la cellule 13, matérialisé par le connecteur 131 souple et plat. Les connecteurs 121 et 131 sont tous deux repliés entre les cellules 12 et 13. Une entretoise 24 est disposée dans le pli du connecteur 121, pré-collée à l'enveloppe externe de la cellule 12, alors qu'une entretoise 25 est disposée dans le pli du connecteur 131, pré-collée à l'enveloppe externe de la cellule 13, de telle sorte que les extrémités repliées des connecteurs 121 et 131 sont fermement maintenues en contact électrique entre les entretoises 24 et 25, sous la pression exercée par la pince 17. A cet effet, des entretoises 52 et 53 faites d'un matériau isolant de l'électricité sont insérées entre les cellules 11 et 12, auxquelles elles ont été pré-collées respectivement, de manière à transmettre la force de compression exercée par la pince 17 au reste de l'empilement. Les entretoises 24 et 25, quant à elles, peuvent aussi bien être faites d'un matériau conducteur de l'électricité, comme un métal, que d'un matériau isolant de l'électricité, comme du plastique, dès lors que le matériau utilisé confère aux entretoises 24 et 25 une résistance élevée à la compression. La figure 2 illustre par une vue de dessous la cellule 11 avant que le connecteur 111 ne soit replié autour de l'entretoise 21, elle-même masquée par l'entretoise 52 sur la figure 2. Le pôle positif de la cellule 13, matérialisé par le connecteur 132 souple et plat, est disposé en regard du pôle négatif de la cellule 14, matérialisé par le connecteur 142 souple et plat. Les connecteurs 132 et 142 sont tous deux repliés entre les cellules 13 et 14. Une entretoise 26 est disposée dans le pli du connecteur 132, pré-collée à l'enveloppe externe de la cellule 13, alors qu'une entretoise 27 est disposée dans le pli du connecteur 142, pré-collée à l'enveloppe externe de la cellule 14, de telle sorte que les extrémités repliées des connecteurs 132 et 142 sont fermement maintenues en contact électrique entre les entretoises 26 et 27, sous la pression exercée par la pince 18. A cet effet, des entretoises 54 et 55 faites d'un matériau isolant de l'électricité sont insérées entre les cellules 12 et 13, auxquelles elles ont été pré-collées respectivement, de manière à transmettre la force de compression exercée par la pince 18 au reste de l'empilement. Les entretoises 26 et 27, quant à elles, peuvent aussi bien être faites d'un matériau conducteur de l'électricité, comme un métal, que d'un matériau isolant de l'électricité, comme du plastique, dès lors que le matériau utilisé confère aux entretoises 26 et 27 une résistance élevée à la compression. Le pôle positif de la cellule 14, matérialisé par le connecteur 141 souple et plat, est disposé en regard du pôle négatif de la cellule 15, matérialisé par le connecteur 151 souple et plat. Les connecteurs 141 et 151 sont tous deux repliés entre les cellules 14 et 15. Une entretoise 28 est disposée dans le pli du connecteur 141, pré-collée à l'enveloppe externe de la cellule 14, alors qu'une entretoise 29 est disposée dans le pli du connecteur 151, pré-collée à l'enveloppe externe de la cellule 15, de telle sorte que les extrémités repliées des connecteurs 141 et 151 sont fermement maintenues en contact électrique entre les entretoises 28 et 29, sous la pression exercée par la pince 17. A cet effet, des entretoises 56 et 57 faites d'un matériau isolant de l'électricité sont insérées entre les cellules 13 et 14, auxquelles elles ont été pré-collées respectivement, de manière à transmettre la force de compression exercée par la pince 17 au reste de l'empilement. Les entretoises 28 et 29, quant à elles, peuvent aussi bien être faites d'un matériau conducteur de l'électricité, comme un métal, que d'un matériau isolant de l'électricité, comme du plastique, dès lors que le matériau utilisé confère aux entretoises 28 et 29 une résistance élevée à la compression. Le pôle positif de la cellule 15, matérialisé par le connecteur 152 souple et plat, est disposé en regard du pôle négatif de la cellule 16, matérialisé par le connecteur 162 souple et plat. Les connecteurs 152 et 162 sont tous deux repliés entre les cellules 15 et 16. Une entretoise 30 est disposée dans le pli du connecteur 152, pré-collée à l'enveloppe externe de la cellule 15, alors qu'une entretoise 31 est disposée dans le pli du connecteur 162, pré-collée à l'enveloppe externe de la cellule 16, de telle sorte que les extrémités repliées des connecteurs 152 et 162 sont fermement maintenues en contact électrique entre les entretoises 30 et 31, sous la pression exercée par la pince 18. A cet effet, des entretoises 58 et 59 faites d'un matériau isolant de l'électricité sont insérées entre les cellules 14 et 15, auxquelles elles ont été pré-collées respectivement. De même, une entretoise 72 faite d'un matériau isolant de l'électricité est insérée entre la cellule 16, à laquelle elle a été pré-collée, et la pince 18, de manière à transmettre la force de compression exercée par la pince 18 au reste de l'empilement. Les entretoises 30 et 31, quant à elles, peuvent aussi bien être faites d'un matériau conducteur de l'électricité, comme un métal, que d'un matériau isolant de l'électricité, comme du plastique, dès lors que le matériau utilisé confère aux entretoises 30 et 31 une résistance élevée à la compression. Le pôle positif de la cellule 16est matérialisé par le connecteur 161 souple et plat. Le connecteur 161 est replié du côté opposé à la cellule adjacente 15, une entretoise 32 étant disposée dans le pli du connecteur 161, pré-collée à l'enveloppe externe de la cellule 16. Entre l'extrémité repliée du connecteur 161 et la pince 17 est insérée une borne 34 formant le pôle négatif du module 1. L'extrémité repliée du connecteur 161 et la borne 34 sont fermement maintenues en contact électrique entre l'entretoise 32 et la pince 17, sous la pression exercée par ladite pince 17. A cet effet, des entretoises 70 et 71 faites d'un matériau isolant de l'électricité sont insérées entre les cellules 15 et 16, auxquelles elles ont été pré-collées respectivement, de manière à transmettre la force de compression exercée par la pince 17 au reste de l'empilement.

La figure 3 illustre schématiquement un autre mode de réalisation, dans lequel les pinces 17 et 18, qui avaient pour fonction principale d'exercer une force de compression sur l'empilement de cellules 11 à 16, sont remplacées par un boîtier. Sur la figure 3, pour des raisons de clarté les cellules 11 à 16 ne sont pas illustrées individuellement, seul leur empilement étant illustré et référencé 65. Les cellules sont disposées verticalement, comme l'indique l'agencement vertical des entretoises 51, 22, 23, 54, 55, 26, 27, 58, 59, 30, 31 et 72, ainsi que l'agencement vertical des connecteurs 112, 122, 132, 142, 152 et 162. Ce boîtier est formé par un réceptacle 60, dans lequel peut être inséré l'empilement 65. Des nervures 61 et 62 sont disposées dans le réceptacle 60 de manière à d'abord positionner puis à appliquer une première force de compression sur l'empilement 65. Le réceptacle 60 est apte à être fermé par un couvercle 64, dont les bords exercent une seconde force de compression sur l'empilement 65 par l'intermédiaire des bords du réceptacle 60. Un élément 63 de calage, par exemple en mousse, disposé entre le couvercle 64 et l'empilement 65 permet de maintenir ce dernier au fond du réceptacle 61.

Avantageusement, dans un autre mode de réalisation, l'empilement de cellules peut être enfermé dans un boîtier de telle sorte que l'empilement soit comprimé entre le réceptacle du boîtier et son couvercle. Par exemple, il peut s'agir d'un boîtier conforme au boîtier pour module de batterie décrit par la demanderesse dans la demande de brevet français dont le numéro de dépôt est FR1202026. (numéro de publication FR2993708). L'invention décrite précédemment a encore pour principal avantage qu'elle propose un module compact autorisant un nombre maximum de cellules dans un volume disponible limité, augmentant ainsi l'autonomie. Encore un autre avantage de l'invention est son coût de mise en oeuvre, qui est considérablement inférieur au coût d'un assemblage par soudage ou par clinchage.

## Revendications

1. Module (1) comportant une pluralité de cellules prismatiques souples de stockage d'électricité (11, 12, 13, 14, 15, 16), chaque cellule comportant sur au moins un de ses bords une borne électrique souple et plate (111, 112, 122, 121, 131, 132, 142, 141, 151, 152, 162, 161), les cellules étant agencées l'une contre l'autre pour former un empilement, les bornes électriques des cellules étant alignées dans l'empilement, le module étant **caractérisé en ce que** :
- des bornes souples et plates (112, 122) d'un couple de deux cellules adjacentes (11, 12) dans l'empilement, l'une étant une borne positive et l'autre étant une borne négative, sont repliées entre lesdites deux cellules ;
- deux entretoises (22, 23) sont insérées dans le pli de chacune des deux dites bornes souples respectivement ;
- il comporte des moyens pour exercer une force de compression de l'empilement de cellules disposés de manière à comprimer l'une contre l'autre au moins une partie des deux dites bornes entre les deux dites entretoises.

2. Module (1) selon la revendication 1, **caractérisé en ce que** chaque cellule prismatique comporte une borne positive et une borne négative disposées sur des bords opposés de ladite cellule, les cellules étant disposées dans l'empilement de telle sorte que tout couple de cellules adjacentes a une borne positive et une borne négative comprimées au moins en partie l'une contre l'autre entre deux entretoises.

3. Module (1) selon la revendication 1, **caractérisé en ce que** la borne négative (111) d'une première cellule (11) de l'empilement est connectée à une borne négative (33) dudit module, la borne positive (161) d'une dernière cellule (16) de l'empilement est connectée à une borne positive (34) dudit module.

4. Module (1) selon la revendication 2, **caractérisé en ce que** les moyens pour exercer la force de compression incluent :
- au moins une pince (17) ;
- au moins une entretoise (52) faite d'un matériau électriquement isolant disposée entre deux cellules (11, 12) pour transmettre la force compression à l'ensemble de l'empilement de cellules.

5. Module (1) selon la revendication 4, **caractérisé en ce que** la pince (17, 18) est faite au moins partiellement d'un matériau déformable, de sorte qu'une force de rappel, exercée par le matériau pour ramener la pince à une forme initiale, comprime l'empilement.

6. Module (1) selon la revendication 1, **caractérisé en ce que** les entretoises sont faites au moins partiellement d'un matériau ayant une résistance élevée à la compression.

7. Module (1) selon la revendication 1, **caractérisé en ce que** les moyens de compression incluent un réceptacle (60) contenant l'empilement de cellules (11, 12, 13, 14, 15, 16), un couvercle (64) dudit réceptacle exerçant, dans une configuration de fermeture dudit réceptacle, une force de compression sur l'empilement.

8. Batterie **caractérisée en ce que** comporte au moins un module selon la revendication 1.

9. Véhicule électrique ou hybride comportant une batterie de traction selon la revendication 8.

## Patentansprüche

1. Modul (1), umfassend mehrere weiche prismatische Zellen zum Speichern von Elektrizität (11, 12, 13, 14, 15, 16), wobei jede Zelle an mindestens einer ihrer Seiten einen weichen und flachen elektrischen Anschluss (111, 112, 122, 121, 131, 132, 142, 141, 151, 152, 162, 161) umfasst, wobei die Zellen aneinander angeordnet sind, um einen Stapel zu bilden, wobei die elektrischen Anschlüsse der Zellen in dem Stapel ausgerichtet sind, wobei das Modul **dadurch gekennzeichnet ist, dass**:
- weiche und flache Anschlüsse (112, 122) eines Paares zweier benachbarter Zellen (11, 12) in dem Stapel zwischen den zwei Zellen gefaltet sind, wobei einer ein positiver Anschluss und der andere ein negativer Anschluss ist;
- zwei Abstandshalter (22, 23) in den Falz der jeweiligen zwei weichen Anschlüsse eingeführt sind;
- es Mittel zum Ausüben einer Druckkraft des Zellstapels umfasst, die angeordnet sind, zumindest einen Teil der zwei Anschlüsse zwischen den zwei Abstandshaltern aneinanderzudrücken.

2. Modul (1) nach Anspruch 1, **dadurch gekennzeichnet, dass** jede prismatische Zelle einen positiven Anschluss und einen negativen Anschluss umfasst, die an gegenüberliegenden Seiten der Zelle angeordnet sind, wobei die Zellen in dem Stapel derart angeordnet sind, dass jedes Paar benachbarter Zellen einen positiven Anschluss und einem negativen Anschluss aufweist, die zumindest teilweise zwischen zwei Abstandshaltern aneinandergedrückt sind.

3. Modul (1) nach Anspruch 1, **dadurch gekennzeichnet, dass** der negative Anschluss (111) einer ersten Zelle (11) des Stapels an einen negativen Anschluss (33) des Moduls angeschlossen ist, der positive Anschluss (161) einer letzten Zelle (16) des Stapels an einen positiven Anschluss (34) des Moduls angeschlossen ist.

4. Modul (1) nach Anspruch 2, **dadurch gekennzeichnet, dass** die Mittel zum Ausüben der Druckkraft enthalten:
- mindestens eine Klammer (17);
- mindestens einen Abstandshalter (52), der aus einem elektrisch isolierenden Material hergestellt ist, der zwischen zwei Zellen (11, 12) angeordnet ist, um die Druckkraft auf die Zellenstapeleinheit zu übertragen.

5. Modul (1) nach Anspruch 4, **dadurch gekennzeichnet, dass** die Klammer (17, 18) zumindest teilweise aus einem verformbaren Material hergestellt ist, so dass eine Rückstellkraft, die von dem Material ausgeübt wird, um die Klammer in eine Ausgangsform zurückzubringen, den Stapel zusammendrückt.

6. Modul (1) nach Anspruch 1, **dadurch gekennzeichnet, dass** die Abstandshalter zumindest teilweise aus einem Material hergestellt sind, das eine hohe Druckfestigkeit aufweist.

7. Modul (1) nach Anspruch 1, **dadurch gekennzeichnet, dass** die Druckmittel eine Aufnahme (60) enthalten, die den Zellstapel (11, 12, 13, 14, 15, 16) enthält, wobei ein Deckel (64) der Aufnahme in einer Schließkonfiguration der Aufnahme eine Druckkraft auf den Stapel ausübt.

8. Batterie, **dadurch gekennzeichnet, dass** mindestens ein Modul nach Anspruch 1 umfasst.

9. Elektro- oder Hybridfahrzeug, das eine Antriebsbatterie nach Anspruch 8 umfasst.

## Claims

1. Module (1) comprising a plurality of flexible prismatic cells for storing electricity (11, 12, 13, 14, 15, 16), each cell comprising, on at least one of the edges thereof, a flexible and flat electrical terminal (111, 112, 122, 121, 131, 132, 142, 141, 151, 152, 162, 161), the cells being arranged against one another in order to form a stack, the electrical terminals of the cells being aligned in the stack, the module being **characterized in that**:
- flexible and flat terminals (112, 122) of a pair of two adjacent cells (11, 12) in the stack, one being a positive terminal and the other being a negative terminal, are folded between said two cells;
- two spacers (22, 23) are inserted in the fold of each of said two flexible terminals, respectively;
- it comprises means for exerting a compressive force of the stack of cells disposed so as to compress at least a portion of said two terminals against one another between said two spacers.

2. Module (1) according to Claim 1, **characterized in that** each prismatic cell comprises a positive terminal and a negative terminal disposed on opposite edges of said cell, the cells being disposed in the stack such that each pair of adjacent cells has a positive terminal and a negative terminal compressed at least in part against one another between two spacers.

3. Module (1) according to Claim 1, **characterized in that** the negative terminal (111) of a first cell (11) of the stack is connected to a negative terminal (33) of said module, and the positive terminal (161) of a last cell (16) of the stack is connected to a positive terminal (34) of said module.

4. Module (1) according to Claim 2, **characterized in that** the means for exerting the compressive force include:
- at least one clamp (17);
- at least one spacer (52) made of an electrically insulating material disposed between two cells (11, 12) in order to transmit the compressive force to the stack of cells as a whole.

5. Module (1) according to Claim 4, **characterized in that** the clamp (17, 18) is made at least in part of a deformable material, such that a restoring force, exerted by the material in order to return the clamp to a starting form, compresses the stack.

6. Module (1) according to Claim 1, **characterized in that** the spacers are made at least in part of a material having an increased resistance to compression.

7. Module (1) according to Claim 1, **characterized in that** the compression means include a receptacle (60) containing the stack of cells (11, 12, 13, 14, 15, 16), a cover (64) of said receptacle exerting, in a closed configuration of said receptacle, a compressive force on the stack.

8. Battery, **characterized in that** comprises at least one module according to Claim 1.

9. Electric or hybrid vehicle comprising a traction battery according to Claim 8.
